# EUROPEAN PATENT APPLICATION

(11) **EP 4 293 843 A1**
(43) Date of publication of application: **20.12.2023**
(21) Application number: 22179339.1
(22) Date of filing: 16.06.2022
(51) Int. Cl.: H02G 3/08, H02G 3/12

(54) **INSTALLATION BOX AND INSTALLATION BOX ASSEMBLY**

(71) Applicant: ABB SCHWEIZ AG, 5400 Baden (CH)
(72) Inventor: Andersson, Johan, 06100 Porvoo (FI); Luomi, Juho, 06100 Porvoo (FI); Portin, Tuomas, 06100 Porvoo (FI); Peltonen, Riku, 02940 Espoo (FI)
(74) Representative: Kolster Oy Ab

(57) **Abstract**

An installation box comprising: a box case (2) comprising a top wall (11), a bottom wall (12) and at least one side wall (13, 14, 15, 16), the box case (2) has a plurality of side openings (24, 25, 26) in the at least one side wall (13, 14, 15, 16). On a plane perpendicular to a centre axis of each of the side openings (24, 25, 26), a surface area of a projection of the side opening (24, 25, 26) is larger than or equal to 50% of a surface area of a projection the at least one side wall (13, 14, 15, 16). The box case (2) comprises first connection means (31) adapted for connecting a plurality of side extension parts (61, 62, 63) to the box case (2), the first connection means (31) being located adjacent the plurality of side openings (24, 25,26).

## Description

### FIELD OF THE INVENTION

The present invention relates to an installation box adapted to be installed into an opening in a wall.

### BACKGROUND OF THE INVENTION

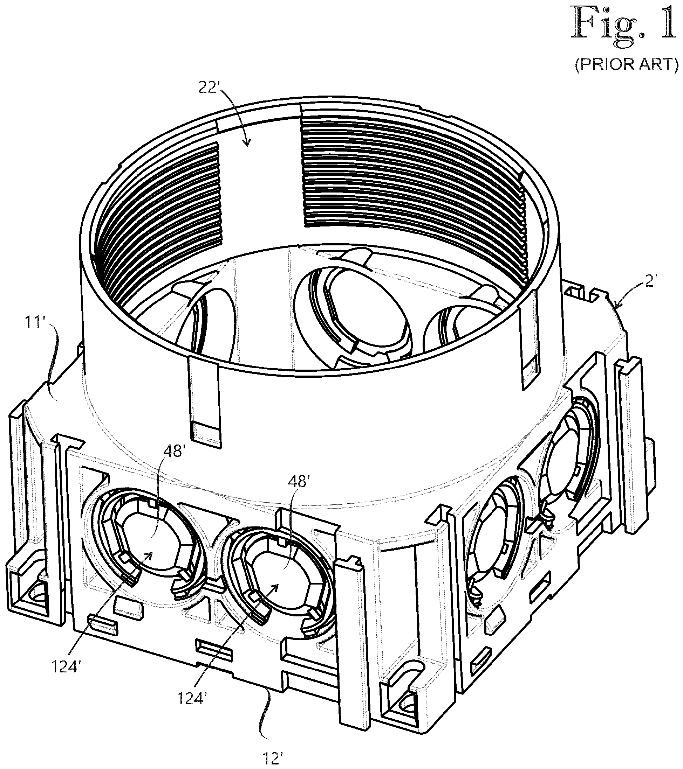

Figure 1 shows a known installation box adapted to be installed into an opening in a wall, the installation box comprising a box case 2' comprising a top wall 11', a bottom wall 12' and four side walls connecting the top wall 11' to the bottom wall 12'. The box case 2' defines a mounting space inside thereof for accommodating an electrical component. The box case 2' has a box opening 22' providing an access into the mounting space through the top wall 11'. Further, there are two installation apertures 124' in each of the side walls.

Each installation aperture 124' is blocked by a removable shield plug 48' which is an integral part of the box case 2'. The removable shield plug 48' is adapted to be cut off in order to enable introducing of an electric cable or an installation conduit into the installation aperture 124'.

One of the disadvantages associated with the above installation box is that in cases where a volume of electrical components required to be installed into the installation box is great, the installation box must be replaced with a larger installation box. Therefore, an electrician needs a plurality of installation boxes of different sizes for one project.

Another disadvantage associated with the above installation box is that using the installation box for installing an electrical component inherently requires removing material from the installation box. That material comprises removable shield plugs 48' cut off from the installation box. Recycling said material is difficult, and in the real world the removed material may end up in a dumping place or simply in nature.

### BRIEF DESCRIPTION OF THE INVENTION

An object of the present invention is to provide an installation box and an installation box assembly comprising the installation box so as to alleviate the above disadvantages. The objects of the invention are achieved by an installation box and an installation box assembly which are characterized by what is stated in the independent claims. The preferred embodiments of the invention are disclosed in the dependent claims.

The invention is based on the idea of providing a box case with a plurality of large side openings, and with first connection means adapted for connecting a plurality of side extension parts to the box case adjacent to the plurality of side openings.

An advantage of the installation box of the invention is that it is possible to expand a mounting space inside the box case with one or more side extension parts. Consequently, the installation box can be used even in cases where electrical components required to be installed into the installation box do not fit into the mounting space itself. If there is no need for additional space on some side of the installation box, corresponding side opening of the box case can simply be blocked with a suitable side extension part.

A further advantage of the installation box of the invention is that there is less need to remove material from the installation box.

In an embodiment, a material of the side extension part is different than a material of the box case. An advantage of this embodiment is that it is possible to manufacture the side extension part from recycled plastic material which is environmentally friendly but mechanical properties of which are not sufficient for the box case of the installation box assembly.

### BRIEF DESCRIPTION OF THE DRAWINGS

In the following the invention will be described in greater detail by means of preferred embodiments with reference to the attached drawings, in which
Figure 1 shows a known installation box;
Figure 2 shows an installation box according to an embodiment of the invention;
Figure 3 shows the installation box of Figure 2 from one side;
Figure 4 shows the installation box of Figure 2 from above;
Figure 5 shows the installation box of Figure 2 from below;
Figure 6 shows an installation box assembly comprising the installation box of Figure 2; and
Figure 7 shows a cross-section of another installation box assembly comprising the installation box of Figure 2.

### DETAILED DESCRIPTION OF THE INVENTION

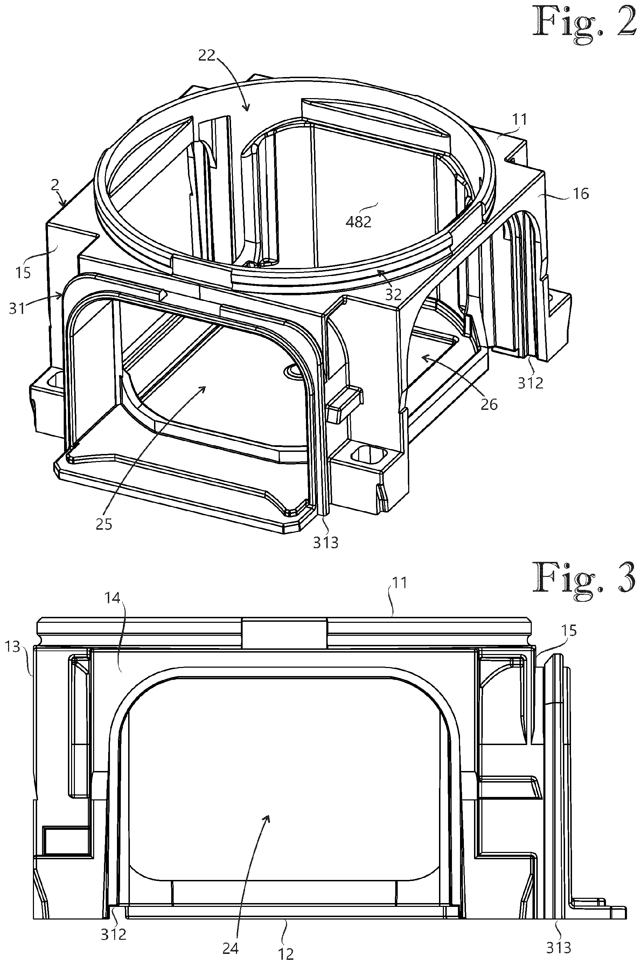

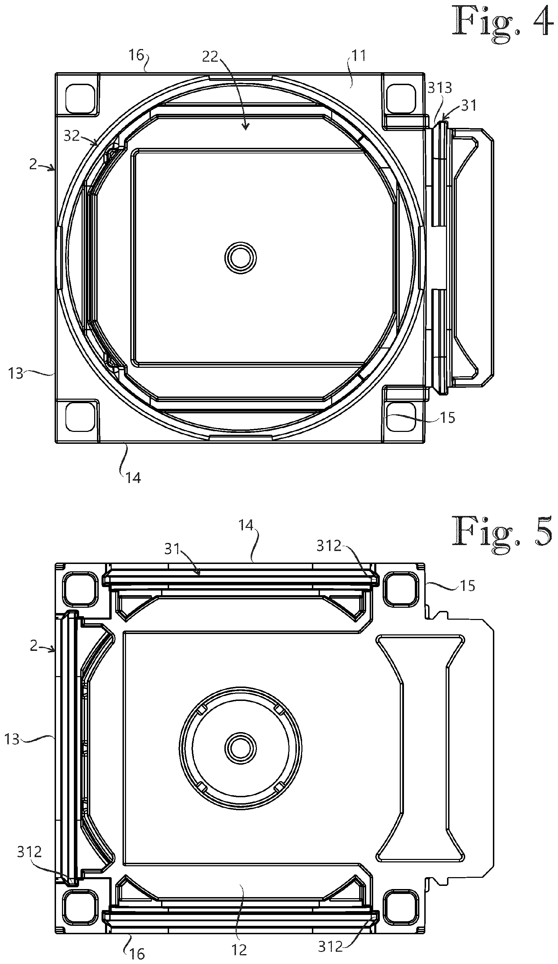

Figure 2 shows an installation box adapted to be installed into an opening in a wall. Figure 3 shows the installation box of Figure 2 from one side. Figure 4 shows the installation box of Figure 2 from above. Figure 5 shows the installation box of Figure 2 from below. The installation box comprises a box case 2 comprising a top wall 11, a bottom wall 12, and four side walls 13, 14, 15 and 16 connecting the top wall 11 to the bottom wall 12.

The box case 2 defines a mounting space inside thereof for accommodating an electrical component. The box case 2 has a box opening 22 providing an access into the mounting space through the top wall 11, and three side openings 24, 25 and 26 each providing an access into the mounting space through the corresponding side wall.

There is no side opening in the side wall 13. However, the side wall 13 comprises a removable wall portion 482 adapted to be removed by hitting with a hammer.

In an alternative embodiment, the box case comprises at least one side wall, and has a plurality of side openings in the at least one side wall providing an access into the mounting space. In an embodiment, the box case comprises exactly one circular side wall extending 360 degrees around the mounting space.

The top wall 11 and the bottom wall 12 are parallel to each other. The top wall 11 and the bottom wall 12 are spaced apart in a height direction. The height direction is perpendicular to the top wall 11 and the bottom wall 12.

When the installation box is in use, i.e. in an opening in a wall, the mounting space is accessible from a first side of a wall panel, and the top wall 11 is in contact with a second side of the wall panel. Therefore, an electrical component accommodated in the installation box, such as a light switch or a wall socket, can be accesses from the first side of the wall, usually from a room of a building. The mounting space is located behind the wall panel, usually inside the wall.

Each of the side openings 24, 25 and 26 is a continuous opening. Each of the side openings 24, 25 and 26 has a centre axis which is an imaginary axis parallel to a direction in which the side opening extends through the corresponding side wall. On a plane perpendicular to the centre axis of each of the side openings 24, 25 and 26, a surface area of a projection of the side opening is larger than or equal to 50% of a surface area of a projection the side wall. The centre axes of the side openings 24, 25 and 26 are perpendicular to a centre axis of the box opening 22.

The box case 2 comprises first connection means 31 and second connection means 32. The first connection means 31 are adapted for connecting a plurality of side extension parts to the box case 2. The second connection means 32 are adapted for connecting a top extension part to the box case 2.

The first connection means 31 are located adjacent to the side openings 24, 25 and 26 such that the box case 2 is adapted to receive a side extension part adjacent to each of the side openings. Further, the first connection means 31 are located adjacent to the removable wall portion 482 of the side wall 13.

The first connection means 31 comprises a rail member 312 for each of the side openings 24 and 26, and for the removable wall portion 482. The first connection means 31 also comprises a rail member 313 for the side opening 25. Each of the rail members 312 and 313 extends in a direction perpendicular to the centre axis of the corresponding side opening, and is adapted for sliding the corresponding side extension part into a position adjacent to the side opening, and preventing detaching of the corresponding side extension part from the box case 2 in a direction parallel to the centre axis of the side opening. The first connection means 31 are integral part of the box case 2.

The second connection means 32 are located adjacent to the box opening 22 such that the box case 2 is adapted to receive a top extension part adjacent to the box opening 22. The second connection means 32 are adapted for preventing rectilinear detaching of the top extension part from the box case 2 in a direction parallel to the centre axis of the box opening 22. The second connection means 32 are integral part of the box case 2.

In an embodiment, the second connection means comprise a snap fit connection. In another embodiment, the second connection means comprise a thread. Both said second connection means allow connecting a top extension part to the box case without tools.

Figure 3 shows that a distance between an edge of the side opening 24 and an edge of the box opening 22 in the height direction is less than 20% of a dimension of the box case 2 in the height direction. In an alternative embodiment, a distance between an edge of the side opening and an edge of the box opening in the height direction is less than or equal to 30% of a dimension of the box case in the height direction. Herein, an edge of the box opening is an outer edge of the box opening located furthest from a centre point of the mounting space.

Figure 4 shows that the box opening 22 is a large continuous opening. A surface area the box opening 22 is larger than a surface area of any of the side openings 24, 25 and 26. The surface area of the box opening 22 is larger than 60% of a surface area of a projection of the top wall 11 on a plane perpendicular to a centre axis of the box opening 22. In an alternative embodiment, a surface area of the box opening is larger than or equal to 50% of a surface area of a projection of the top wall on a plane perpendicular to a centre axis of the box opening.

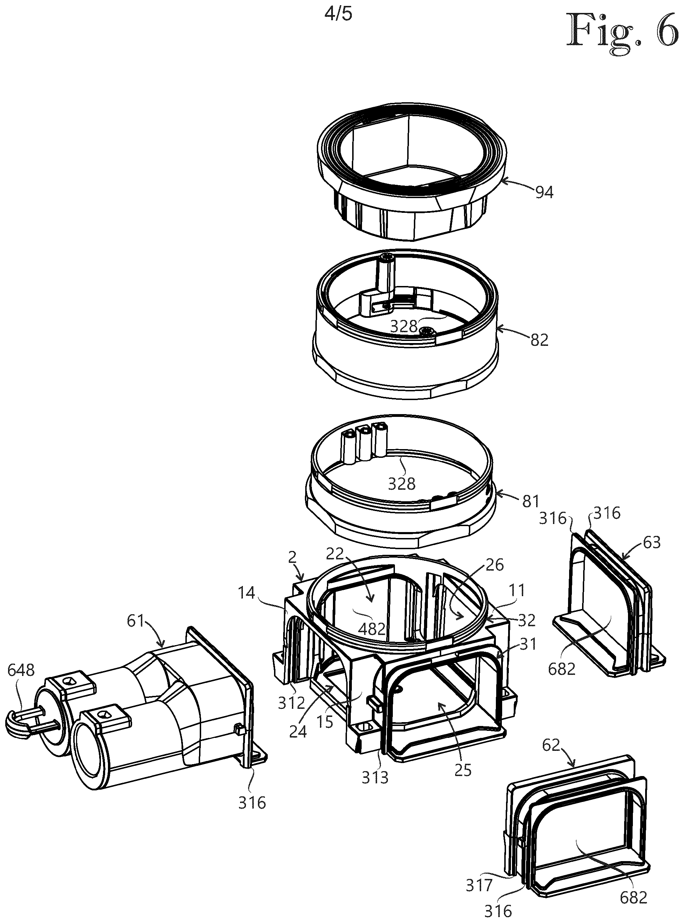

Figure 6 shows an installation box assembly comprising the installation box of Figure 2, top extension parts 81 and 82, a lid 94, and three side extension parts 61, 62, and 63. Each of the side extension parts 61, 62, and 63 has side extension part connection means adapted to co-operate with the first connection means 31 for connecting the side extension part to the box case 2. Each of the top extension parts 81 and 82 has top extension part connection means 328 adapted to co-operate with the second connection means 32 for connecting the top extension part to the box case 2.

The side extension part connection means 316 of the side extension parts 61 and 63 are adapted to co-operate with rail members 312 in order to allow sliding the side extension part into its position adjacent to the side opening in an upwards direction. Also, the side extension part connection means 316 are adapted to co-operate with the first connection means 31 in order to prevent sliding the side extension part beyond its position adjacent to the side opening in the upwards direction. The upwards direction is a direction from the bottom wall 12 to the top wall 11.

The side extension part connection means 317 of the side extension part 62 are adapted to co-operate with the rail member 313 in order to allow sliding the side extension part 62 into its position adjacent to the side opening 25 in a downwards direction. Also, the side extension part connection means 317 are adapted to co-operate with the first connection means 31 in order to prevent sliding the side extension part 62 beyond its position adjacent to the side opening 25 in the downwards direction. The downwards direction is a direction from the top wall 11 to the bottom wall 12.

In an alternative embodiment, the first connection means comprises identical rail members for each of the side openings such that all of the rail members are adapted for sliding the corresponding side extension part into a position adjacent to the side opening in the same direction. In this embodiment, the side extension part connection means of all side extension parts are identical, and any one of the side extension parts can be slid into a position adjacent to any one of the side openings.

In an embodiment, the side extension part connection means and the first connection means are adapted to provide a liquid tight sealing between the side extension part and the box case.

Each of the side extension parts 61, 62, and 63 defines a side extension space inside thereof, and comprises an inlet opening providing an access to the side extension space. A surface area of the inlet opening is larger than 90% of a surface area of corresponding side opening such that when the side extension part is connected to the box case 2 with the side extension part connection means, the side extension space is connected to the mounting space through an opening whose surface area is larger than 90% of the surface area of the corresponding side opening. In an alternative embodiment, a surface area of the inlet opening of the side extension part is larger than or equal to 90% of a surface area of corresponding side opening.

The side extension parts 61, 62, and 63 are different from each other. The side extension part 61 has attachment means for attaching two installation conduits to the side extension part 61. The side extension part 61 comprises an outlet opening providing an access to the side extension space such that the outlet opening together with the inlet opening provide a route through the extension part 61. The outlet opening of the side extension part 61 has two separate openings each adapted to receive one installation conduit. One of the separate openings is blocked with a removable plug 648.

A surface area of the outlet opening of the side extension part 61 is greater than 50% of the surface area of the corresponding side opening 24. Herein, the surface area of the outlet opening is a total area of all separate outlet openings of the side extension part. In an alternative embodiment, a surface area of the outlet opening of the side extension part is greater than or equal to 50% of the surface area of the corresponding side opening.

The side extension part 62 is an interconnector element for connecting two installation boxes shown in Figure 2 to each other such that there is an extension distance between the installation boxes. The side extension part 62 comprises side extension part connection means 316 and side extension part connection means 317 adapted to co-operate with the first connection means 31 of the two installation boxes. The side extension part 62 comprises a removable extension wall portion 682 adapted to be removed by hitting with a hammer. When in place, the removable extension wall portion 682 is adapted to separate the mounting spaces of the two connected installation boxes. Without the removable extension wall portion 682, there is a route through the extension part 62.

The side extension part 63 is an interconnector element for connecting two installation boxes shown in Figure 2 to each other such that the installation boxes are in contact with each other. The side extension part 63 comprises two side extension part connection means 316 adapted to co-operate with the first connection means 31 of the two installation boxes. The side extension part 63 comprises a removable extension wall portion 682 adapted to be removed by hitting with a hammer. When in place, the removable extension wall portion 682 is adapted to separate the mounting spaces of the two connected installation boxes. Without the removable extension wall portion 682, there is a route through the extension part 63.

In an alternative embodiment, there are interconnector elements with fixed extension wall portions and interconnector elements with through apertures. In this embodiment, there is never need to remove material from any interconnector element. Instead, an electrician chooses a suitable interconnector element for the situation. An interconnector element with a fixed extension wall portion is selected only if it is required to separate the mounting spaces of the two connected installation boxes.

The side extension space of each of the side extension parts 61, 62, and 63 provide extra space for electrical components and electric wires. Volume of the side extension space of the side extension part 61 is greater than 30% of a volume of the mounting space of the installation box. In alternative embodiments, a volume of the side extension space is greater than or equal to 5% of a volume of the mounting space.

The side extension parts 61, 62 and 63 are made of recycled plastic material. The installation box is made of plastic material having at least one mechanical property that is better than the corresponding mechanical property of the recycled plastic material of the side extension parts. In an embodiment, the at least one mechanical property comprises stiffness or heat resistance.

Both the material of the box case 2 and the material of the side extension parts are electrically insulating materials. In an alternative embodiment, a material of the side extension part is different than a material of the box case, wherein both materials are recycled materials.

Each of the top extension parts 81 and 82 define a top extension space inside thereof, and comprises an inlet opening and an outlet opening providing an access to the top extension space such that the outlet opening together with the inlet opening provide a route through the top extension part. A surface area of both the inlet opening and the outlet opening are larger than 90% of a surface area of the box opening 22 such that when the top extension part is connected to the box case 2 with the top extension part connection means 328, there is a through opening extending through the top extension part to the mounting space such that a surface area of the through opening is larger than 90% of the surface area of the box opening 22. A volume of the top extension space is greater than 10% of a volume of the mounting space.

The top extension space of the top extension part provides extra space for electrical components and electric wires. An expanded mounting space provided by the top extension space is useful for example in cases were both a light switch and dimmer electronics are mounted in the installation box.

The top extension parts 81 and 82 are adapted to be connected together. Consequently, it is possible to expand the mounting space upwards as much as required. Alternatively, only one of the top extension parts 81 and 82 can be connected to the box case 2.

The lid 94 is adapted to be connected to a top extension part or to a box case. In an embodiment, a material of the lid is the same as the material of the side extension parts.

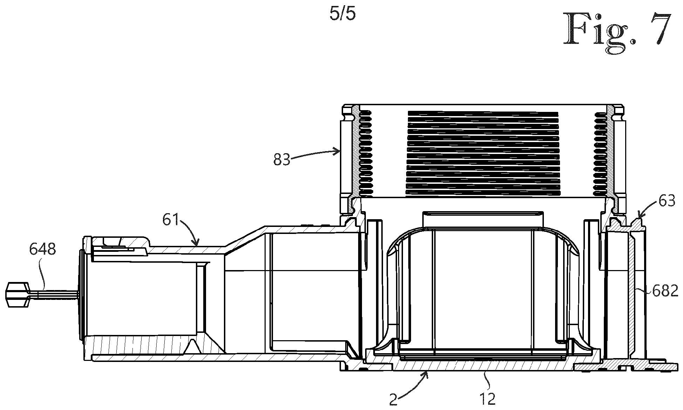

Figure 7 shows a cross-section of an installation box assembly comprising the installation box of Figure 2, the side extension parts 61 and 63, and a top extension part 83. Figure 7 shows how the top extension part 83 and the side extension parts 61 and 63 provide extra space for electrical components and electric wires in the installation box assembly. The mounting space the box case 2 forms, together with the top extension space of the top extension part 83, and the side extension spaces of the side extension parts 61 and 63, a large continuous space inside the installation box assembly.

It will be obvious to a person skilled in the art that the inventive concept can be implemented in various ways. The invention and its embodiments are not limited to the examples described above but may vary within the scope of the claims.

## Claims

1. An installation box adapted to be installed into an opening in a wall, the installation box comprising:
a box case (2) comprising a top wall (11), a bottom wall (12) and at least one side wall (13, 14, 15, 16) connecting the top wall (11) to the bottom wall (12), the box case (2) defining a mounting space inside thereof for accommodating an electrical component, and the box case (2) has a box opening (22) providing an access into the mounting space through the top wall (11), and a plurality of side openings (24, 25, 26) in the at least one side wall (13, 14, 15, 16) providing an access into the mounting space,
**characterized in that** on a plane perpendicular to a centre axis of each of the side openings (24, 25, 26), a surface area of a projection of the side opening (24, 25, 26) is larger than or equal to 50% of a surface area of a projection the at least one side wall (13, 14, 15, 16),
wherein the box case (2) comprises first connection means (31) adapted for connecting a plurality of side extension parts (61, 62, 63) to the box case (2), the first connection means (31) being located adjacent to the plurality of side openings (24, 25, 26).

2. The installation box according to claim 1, wherein the first connection means (31) comprises at least one rail member (312, 313) for each of the side openings (24, 25, 26), the at least one rail member (312, 313) extending in a direction perpendicular to the centre axis of the side opening (24, 25, 26), and being adapted for sliding the corresponding side extension part (61, 62, 63) into a position adjacent to the side opening (24, 25, 26), and preventing detaching of the corresponding side extension part (61, 62, 63) from the box case (2) in a direction parallel to the centre axis of the side opening (24, 25, 26).

3. The installation box according to claim 1 or 2, wherein the first connection means (31) are integral part of the box case (2).

4. The installation box according to any one of claims 1 to 3, wherein a distance between an edge of each of the side openings (24, 25, 26) and an edge of the box opening (22) in a height direction is less than or equal to 20% of a dimension of the box case (2) in the height direction, wherein the height direction is a direction is perpendicular to the top wall (11).

5. The installation box according to any one of claims 1 to 4, wherein a surface area of the box opening (22) is larger than a surface area of any of the side openings (24, 25, 26), and the surface area of the box opening (22) is larger than or equal to 50% of a surface area of a projection of the top wall (11) on a plane perpendicular to a centre axis of the box opening (22).

6. The installation box according to any one of claims 1 to 5, wherein a distance between an edge of the box opening (22) and an edge of each of the side openings (24, 25, 26) in a direction parallel to a centre axis of the box opening (22) is less than or equal to 20% of a dimension of the box case (2) in the direction parallel to the centre axis of the box opening (22).

7. The installation box according to according to any one of the preceding claims, wherein the box case (2) comprises second connection means (32) adapted for connecting a top extension part (81, 82, 83) to the box case (2), the second connection means (32) being located adjacent to the box opening (22).

8. The installation box according to claim 7, wherein the second connection means (32) are adapted for preventing rectilinear detaching of the top extension part (81, 82, 83) from the box case (2) in a direction parallel to the centre axis of the box opening (22).

9. The installation box according to claim 8, wherein the second connection means (32) comprises a snap fit connection or a thread.

10. The installation box assembly according to any one of claims 7 to 9, wherein the second connection means (32) are integral part of the box case (2).

11. An installation box assembly comprising:
the installation box according to any one of the preceding claims; and
a side extension part (61, 62, 63) having side extension part connection means (316, 317) adapted to co-operate with the first connection means (31) for connecting the side extension part (61, 62, 63) to the box case (2), the side extension part (61, 62, 63) defining a side extension space inside thereof, and comprising an inlet opening providing an access to the side extension space, wherein a surface area of the inlet opening is larger than or equal to 90% of a surface area of corresponding side opening (24, 25, 26) such that when the side extension part (61, 62, 63) is connected to the box case (2) with the side extension part connection means (316, 317), the side extension space is connected to the mounting space through an opening whose surface area is larger than or equal to 90% of the surface area of the corresponding side opening (24, 25, 26).

12. The installation box assembly according to claim 11, wherein a volume of the side extension space is greater than or equal to 5% of a volume of the mounting space.

13. The installation box assembly according to claim 11 or 12, wherein the side extension part (61) comprises an outlet opening providing an access to the side extension space such that the outlet opening together with the inlet opening provide a route through the extension part, wherein a surface area of the outlet opening is greater than or equal to 50% of the surface area of the corresponding side opening (24).

14. The installation box assembly according to any one of claims 11 to 13, wherein the side extension part (62, 63) is an interconnector element for connecting two installation boxes to each other.

15. The installation box assembly according to any one of claims 11 to 14, wherein a material of the side extension part (61, 62, 63) is different than a material of the box case (2), wherein both the material of the box case (2) and the material of the side extension part (61, 62, 63) are electrically insulating materials.

16. The installation box assembly according to claim 15, wherein the side extension part (61, 62, 63) is made of a recycled plastic material.

17. An installation box assembly comprising:
the installation box according to any one of claims 7 to 10; and
a top extension part (81, 82, 83) having top extension part connection means (328) adapted to co-operate with the second connection means (32) for connecting the top extension part (81, 82, 83) to the box case (2), the top extension part (81, 82, 83) defining a top extension space inside thereof, and comprising an inlet opening and an outlet opening providing an access to the top extension space such that the outlet opening together with the inlet opening provide a route through the top extension part (81, 82, 83),
wherein a surface area of both the inlet opening and the outlet opening are larger than or equal to 90% of a surface area of the box opening (22) such that when the top extension part (81, 82, 83) is connected to the box case (2) with the top extension part connection means (328), there is a through opening extending through the top extension part (81, 82, 83) to the mounting space such that a surface area of the through opening is larger than or equal to 90% of the surface area of the box opening (22),
wherein a volume of the top extension space is greater than or equal to 10% of a volume of the mounting space.
